# EUROPÄISCHE PATENTANMELDUNG

(11) **EP 1 564 649 A2**
(43) Veröffentlichungstag der Anmeldung: **17.08.2005**
(21) Anmeldenummer: 05003234.1
(22) Anmeldetag: 16.02.2005
(51) Int. Cl.: G06F 17/10

(54) **Erzeugung von Primzahlen mittels probabilistischer Tests**

(30) Priorität: 17.02.2004 DE 102004007615
(71) Anmelder: Giesecke & Devrient GmbH, 81677 München (DE)
(72) Erfinder: Seysen, Martin, Dr., 80809 München (DE)

(57) **Zusammenfassung**

Bei einem Verfahren zum Ermitteln eines Datenwertes, der mit überwiegender Wahrscheinlichkeit eine Primzahl repräsentiert und höchstens mit einer vorgegebenen Gesamtfehlerwahrscheinlichkeit (ε) eine zusammengesetzte Zahl repräsentiert, werden stufenweise probabilistische Primzahltests ausgeführt, bis ein geeigneter Datenwert gefunden wird. Die Berechnungen jeder Stufe werden derart ausgeführt, daß ihre Fehlerwahrscheinlichkeit höchstens so groß wie ein dieser Stufe zugeordneter Fehlerwahrscheinlichkeitswert (ε_{*i*}) ist. Jeder Fehlerwahrscheinlichkeitswert (ε_{*i*}₊₁) einer weiteren Stufe ist kleiner als der Fehlerwahrscheinlichkeitswert (ε_{*i*}) der vorhergehenden Stufe. Ein Computerprogrammprodukt und eine Vorrichtung, insbesondere ein tragbarer Datenträger, weisen entsprechende Merkmale auf. Die Erfindung verringert den Rechenaufwand, der zum Ermitteln großer Primzahlen mit nachweisbarer Mindestzuverlässigkeit erforderlich ist.

## Beschreibung

Die Erfindung betrifft allgemein das Gebiet der Kryptographie und spezieller das Gebiet des Ermittelns eines Datenwerts, der mit an Sicherheit grenzender Wahrscheinlichkeit eine Primzahl repräsentiert und nur mit einer sehr kleinen Fehlerwahrscheinlichkeit eine zusammengesetzte Zahl repräsentiert. Besonders eignet sich die Erfindung zur Verwendung bei einem tragbaren Datenträger. Ein solcher tragbarer Datenträger kann z.B. eine Chipkarte (*smart card*) in unterschiedlichen Bauformen oder ein Chipmodul oder ein sonstiges ressourcenbeschränktes System sein.

Für den Austausch von verschlüsselten und/ oder signierten Daten ist das z.B. im US-Patent 4,405,829 beschriebene RSA-Verfahren gut bekannt. Gemäß dem RSA-Verfahren werden ein öffentlicher Schlüssel zur Verschlüsselung oder Signaturverifikation und ein geheimer privater Schlüssel zur Entschlüsselung oder Signaturerzeugung eingesetzt. Um ein Schlüsselpaar für das RSA-Verfahren zu erzeugen, müssen zwei geheime Primzahlen *p* und *q* festgelegt werden, deren Produkt *p·q* als sogenannter Modulus *n* einen Teil des öffentlichen Schlüssels bildet.

Die Sicherheit des RSA-Verfahrens beruht auf der Tatsache, daß gegenwärtig kein praktikabler Weg zur Faktorisierung des Modulus *n* bekannt ist, wenn dessen Primfaktoren *p* und *q* zufällig gewählt und hinreichend groß sind. Die Primzahlen *p* und *q* haben üblicherweise dieselbe oder eine leicht unterschiedliche Bitlänge im Bereich zwischen 350 Bit und 1050 Bit. In der Regel werden für die Primzahlen *p* und *q* einige weitere Eigenschaften gefordert, wie sie z.B. in dem Dokument *"Algorithms and Parameters for Secure Electronic Signatures*" der *European Electronic Signature Standardisation Initiative Steering Group,* V.2.1., 19. Oktober 2001, beschrieben sind.

Um geeignete Primzahlen *p* und *q* zu ermitteln, ist es bekannt, Zufallszahlen oder von Zufallszahlen abgeleitete Werte auf ihre Primzahleigenschaft zu überprüfen. Wegen ihrer Effizienz werden hierzu häufig probabilistische Primzahltests verwendet, die eine zu überprüfende Zahl entweder sicher als zusammengesetzte Zahl oder als mögliche Primzahl identifizieren. Ein bekannter probabilistischer Primzahltest ist der Rabin-Miller-Test, der in dem Artikel "*Probabilistic algorithms for testing primality*" von M. O. Rabin, erschienen im *Journal of Number Theory* **12** (1980), Seiten 128 - 138, beschrieben ist. Weitere probabilistische Primzahltests sind unter den Bezeichnungen quadratischer Frobenius-Test *(quadratic Frobenius test -* QFT) und Fermat-Test bekannt.

Wenn eine Zahl bei einem einzigen Durchlauf eines probabilistischen Primzahltests als mögliche Primzahl identifiziert wird, besteht eine gewisse Fehlerwahrscheinlichkeit - z.B. 25 % -, daß die Zahl dennoch eine zusammengesetzte Zahl ist. Indem die zu testende Zahl durch mehrere probabilistische Primzahltests mit unterschiedlichen Basen mehrmals überprüft wird, läßt sich diese Fehlerwahrscheinlichkeit jedoch auf einen Wert verringern, der auch für sicherheitskritische Anwendungen - z.B. die Erzeugung eines RSA-Schlüssels - hingenommen werden kann.

In dem bereits zitierten Artikel von Rabin und in dem Artikel *"On generation of probable primes by incremental search*" von J. Brandt und I. Damgard, erschienen in dem Konferenzband *Advances in Cryptology - CRYPTO* ' 92, Springer Verlag, LNCS 740, August 1992, Seiten 358 - 370, ist ein Verfahren angegeben, bei dem zunächst eine ungerade Zufallszahl *n* bestimmt wird und dann die Zahlen *n, n+2, n+4,* ... durch jeweils *t* Rabin-Miller-Tests auf ihre Primzahleigenschaft überprüft werden. Das Verfahren wird erfolgreich beendet, sobald eine Zahl alle *t* Rabin-Miller-Tests besteht. Diese Zahl gilt als wahrscheinliche Primzahl. Sind mehr als *s* Zahlen ohne Erfolg untersucht worden, so wird das Verfahren als fehlgeschlagen abgebrochen.

Bei einem Fehlschlag des Verfahrens, wenn also alle Zahlen im Suchbereich *n*, *n*+2, ..., *n*+(2*s*-2) erfolglos getestet worden sind, wird das Verfahren mit einem neuen Startwert *n*' wiederholt. Der neue Startwert *n*' kann zufällig gewählt werden oder von dem bisherigen Startwert *n* - z.B. durch eine Verknüpfung mit einer kryptographisch nicht sicheren Pseudozufallszahl - abgeleitet werden. Die Suche wird mit jeweils weiteren Suchbereichen solange fortgesetzt, bis eine wahrscheinliche Primzahl gefunden worden ist.

In den oben genannten Artikeln von Rabin sowie von Brandt und Damgard ist eine obere Grenze für die Fehlerwahrscheinlichkeit bei einem Durchlauf des Verfahrens durch einen Suchbereich angegeben. Aus der Fachliteratur sind auch entsprechende Formeln für mehrfache Verfahrensdurchläufe - also für das Durchsuchen mehrerer Suchbereiche, solange, bis eine wahrscheinliche Primzahl gefunden wurde - bekannt. Unter Verwendung dieser Formeln läßt sich aus einer vorgegebenen Gesamtfehlerwahrscheinlichkeit ε die Anzahl *t* der für jede zu überprüfende Zahl auszuführenden Rabin-Miller-Tests angeben, so daß die Wahrscheinlichkeit, daß der ermittelte Datenwert keine Primzahl, sondern eine zusammengesetzte Zahl repräsentiert, nachweisbar kleiner als die Gesamtfehlerwahrscheinlichkeit ε ist.

Für die hier beispielhaft betrachtete Anwendung der RSA-Schlüsselgenerierung wird in dem bereits zitierten Normdokument "*Algorithms and Parameters for Secure Electronic Signatures*" eine nachweisbare Gesamtfehlerwahrscheinlichkeit ε von höchstens 2⁻⁸⁰ gefordert, und es ist zu erwarten, daß in Zukunft noch kleinere Gesamtfehlerwahrscheinlichkeiten ε realisiert werden müssen. Generell soll die Gesamtfehlerwahrscheinlichkeit ε der probabilistischen Berechnungen verschwindend klein gegenüber den Wahrscheinlichkeiten anderer möglicher Fehler - z.B. aufgrund einer Hardwarestörung oder einer Fehlbedienung - sein.

Die Durchführung der Rabin-Miller-Tests oder anderer probabilistischer Primzahltests in einer zum Erzielen der gewünschten Zuverlässigkeit ausreichenden Anzahl erfordert erheblichen Rechenaufwand, der insbesondere bei tragbaren Datenträgern oder anderen ressourcenbeschränkten Systemen sehr ins Gewicht fällt. Es wäre daher wünschenswert, diese Anzahl möglichst weit zu reduzieren.

Die Erfindung hat demgemäß die Aufgabe, eine Technik zum Ermitteln eines Datenwerts bereitzustellen, der mit überwiegender Wahrscheinlichkeit eine Primzahl repräsentiert, wobei mit möglichst geringem Aufwand für probabilistische Primzahltests eine nachweisbare Gesamtfehlerwahrscheinlichkeit ε garantiert werden soll. In bevorzugten Ausgestaltungen soll sich die Erfindung insbesondere zum Einsatz bei kryptographischen Berechnungen und/ oder zur automatischen Ausführung in ressourcenbeschränkten Systemen eignen.

Erfindungsgemäß wird diese Aufgabe ganz oder zum Teil gelöst durch ein Verfahren mit den Merkmalen des Anspruchs 1, ein Computerprogrammprodukt gemäß Anspruch 14 und eine Vorrichtung, insbesondere einen tragbaren Datenträger, gemäß Anspruch 15. Die abhängigen Ansprüche betreffen bevorzugte Ausgestaltungen der Erfindung.

Die Erfindung geht von der Grundüberlegung aus, ein geeignetes Primzahlsuchverfahren stufenweise derart durchzuführen, daß sich in jeder Stufe die Fehlerwahrscheinlichkeit - also die Wahrscheinlichkeit, daß ein ermittelter Datenwert keine Primzahl, sondern eine zusammengesetzte Zahl repräsentiert - verringert. Mit anderen Worten wird die "zur Verfügung stehende" Gesamtfehlerwahrscheinlichkeit ε ungleichmäßig auf die einzelnen Stufen "aufgeteilt".

Das Erzielen einer kleinen Fehlerwahrscheinlichkeit ist aufwendig, weil dafür in der Regel viele probabilistische Primzahltests durchgeführt werden müssen. Andererseits ist auch die Wahrscheinlichkeit, daß viele Stufen durchlaufen werden müssen, sehr klein. Die mit der Verringerung der Fehlerwahrscheinlichkeit einhergehende Erhöhung der Anzahl der Primzahltests hat daher nur eine geringe Auswirkung auf die durchschnittliche Rechenzeit. Demgegenüber fällt der Gewinn, der durch Inkaufnahme einer etwas höheren Fehlerwahrscheinlichkeit in der ersten Stufe erzielt wird, sehr ins Gewicht, weil er bei jedem Verfahrensablauf auftritt.

Das erfindungsgemäße Verfahren benötigt somit im Durchschnitt deutlich weniger Rechenaufwand, um die geforderte Gesamtfehlerwahrscheinlichkeit ε zu erreichen, als ein Verfahren, bei dem die einzelnen Stufen ohne schrittweise Erhöhung der Fehlerwahrscheinlichkeit - also mit gleichbleibender Anzahl probabilistischer Primzahltests für jede zu überprüfende Zahl - ausgeführt werden. Dieser erhebliche Effizienzgewinn läßt sich einsetzen, um einen durch eine Norm geforderten Maximalwert - z.B. 2⁻⁸⁰ - für die Gesamtfehlerwahrscheinlichkeit ε mit weniger Aufwand zu erreichen, oder um bei gleichbleibendem Aufwand die Gesamtfehlerwahrscheinlichkeit ε zu verringern.

Ein weiterer erheblicher Vorteil der Erfindung ist es, daß sich die Gesamtfehlerwahrscheinlichkeit ε in geeigneten Ausgestaltungen leicht abschätzen läßt. Beispielsweise kann vorgesehen sein, daß ein jeder Verfahrensstufe zugeordneter Fehlerwahrscheinlichkeitswert ε_{*i*} mit zunehmender Verfahrensstufe exponentiell abnimmt. Die Gesamtfehlerwahrscheinlichkeit ε kann dann leicht mittels einer geometrischen Reihe abgeschätzt werden.

Es ist prinzipiell möglich, in jeder Verfahrensstufe die Anzahl der für jeden zu überprüfenden Wert maximal durchzuführenden Primzahltests unter Anwendung der bekannten oberen Schranken neu abzuschätzen. Vorzugsweise erfolgt diese Abschätzung jedoch höchstens einmal am Anfang des Verfahrens, und die dabei ermittelte maximale Testanzahl wird stufenweise gemäß einer vorgegebenen Regel erhöht. Beispielsweise kann die vorgegebene Regel lauten, daß die Testanzahl nach jeder Stufe oder nach jeweils zwei Stufen oder nach jeweils drei Stufen um 1 erhöht wird. Bei Ausgestaltungen, bei denen die Testanzahl während mehrerer aufeinanderfolgender Stufen gleichbleibt, ändert sich in der Regel die tatsächliche Fehlerwahrscheinlichkeit in diesen Stufen nicht, während dennoch zur Abschätzung der Gesamtfehlerwahrscheinlichkeit ε von Stufe zu Stufe geringer werdende Fehlerwahrscheinlichkeitswerte ε_{*i*} angenommen werden können.

Erfindungsgemäß wird in jeder Stufe ein Suchbereich *S*_{*i*} nach einer wahrscheinlichen Primzahl durchsucht. Prinzipiell kann der Suchbereich *S*_{*i*} jede beliebige Menge sein. In bevorzugten Ausgestaltungen weist jeder Suchbereich *S*_{*i*} jedoch eine relativ einfache Struktur auf und ist z.B. eine einelementige Menge oder ein Intervall oder eine endliche arithmetische Folge oder ein Intervall, aus dem mindestens eine endliche arithmetische Folge ausgeschlossen wurde, oder eine Vereinigung mehrerer Teil-Suchbereiche der gerade genannten Art. Vor dem Durchführen der eigentlichen probabilistischen Primzahltests können in manchen Ausgestaltungen Vielfache kleiner ganzer Zahlen nach dem Prinzip des Eratosthenes-Siebes ausgeschlossen werden. Eine ähnliche Wirkung wird erzielt, wenn in anderen Ausgestaltungen vor dem Ausführen der probabilistischen Primzahltests eine oder mehrere Probedivision/ en des zu untersuchenden Wertes durch einen oder mehrere kleine/n Primfaktor/en durchgeführt wird/werden.

Vorzugsweise werden die probabilistischen Primzahltests für jeden zu untersuchenden Wert - bis zu der jeweils vorgegebenen Maximalzahl *t* - mit zufällig gewählten Basen ausgeführt. In manchen Ausgestaltungen kann ferner ein vorbereitender Primzahltest mit der Basis 2 durchgeführt werden. Dieser Test mit der vorgegebenen Basis 2 läßt sich sehr effizient implementieren und kann bereits viele zu untersuchende Zahlen als zusammengesetzt identifizieren, bevor die eigentlichen, aufwendigen Primzahltests mit zufälligen Basen erfolgen.

Insbesondere bei Anwendungen zu kryptographischen Zwecken soll die ermittelte wahrscheinliche Primzahl durch Dritte nicht vorhersehbar sein. Mit anderen Worten ist in bevorzugten Ausgestaltungen vorgesehen, daß der ermittelte Datenwert eine Zufallszahl repräsentiert. Dies kann z.B. dadurch erreicht werden, daß bei der Bestimmung der Suchbereiche *S*_{*i*} der Startwert jedes Suchbereichs *S*_{*i*} oder ein sonstiger Wert, der die Position des Suchbereichs *S*_{*i*} im Zahlenraum definiert, als Zufallszahl gewählt wird. Bei der Bestimmung jedes Suchbereichs *S*_{*i*} können ferner weitere Nebenbedingungen beachtet werden, um z.B. sicherzustellen, daß die erzeugte Primzahl den durch die einschlägigen Normen definierten Erfordernissen für die Primfaktoren *p* und *q* eines RSA-Schlüssels entspricht.

Die Aufzählungsreihenfolge der Schritte in den Verfahrensansprüchen soll nicht als Einschränkung des Schutzbereichs verstanden werden. Es sind vielmehr auch Ausgestaltungen der Erfindung vorgesehen, in denen diese Schritte ganz oder teilweise in anderer Reihenfolge und/ oder ganz oder teilweise ineinander verschachtelt (*interleaved*) und/ oder ganz oder teilweise parallel ausgeführt werden.

Das erfindungsgemäße Computerprogrammprodukt weist Programmbefehle auf, um das erfindungsgemäße Verfahren zu implementieren. Ein derartiges Computerprogrammprodukt kann ein körperliches Medium sein, z.B. ein Halbleiterspeicher oder eine Diskette oder eine CD-ROM. Das Computerprogrammprodukt kann jedoch auch ein nicht-körperliches Medium sein, z.B. ein über ein Computernetzwerk übermitteltes Signal. Insbesondere kann das Computerprogrammprodukt Programmbefehle enthalten, die im Zuge der Herstellung oder der Initialisierung oder der Personalisierung eines tragbaren Datenträgers in diesen eingebracht werden.

Die erfindungsgemäße Vorrichtung kann insbesondere ein tragbarer Datenträger, z.B. eine Chipkarte oder ein Chipmodul, sein. Ein derartiger Datenträger enthält in an sich bekannter Weise mindestens einen Prozessor, mehrere in unterschiedlichen Technologien ausgestaltete Speicher und diverse Hilfsbaugruppen wie z.B. Schnittstellenschaltungen, Zeitgeber und Verbindungselemente.

In bevorzugten Weiterbildungen weisen das Computerprogrammprodukt und/ oder die Vorrichtung Merkmale auf, die den in der vorliegenden Beschreibung erwähnten und/ oder den in den abhängigen Verfahrensansprüchen genannten Merkmalen entsprechen.

Weitere Merkmale, Aufgaben und Vorteile der Erfindung ergeben sich aus der folgenden Beschreibung mehrerer Ausführungsbeispiele und Ausführungsalternativen. Es wird auf die schematische Zeichnung verwiesen.

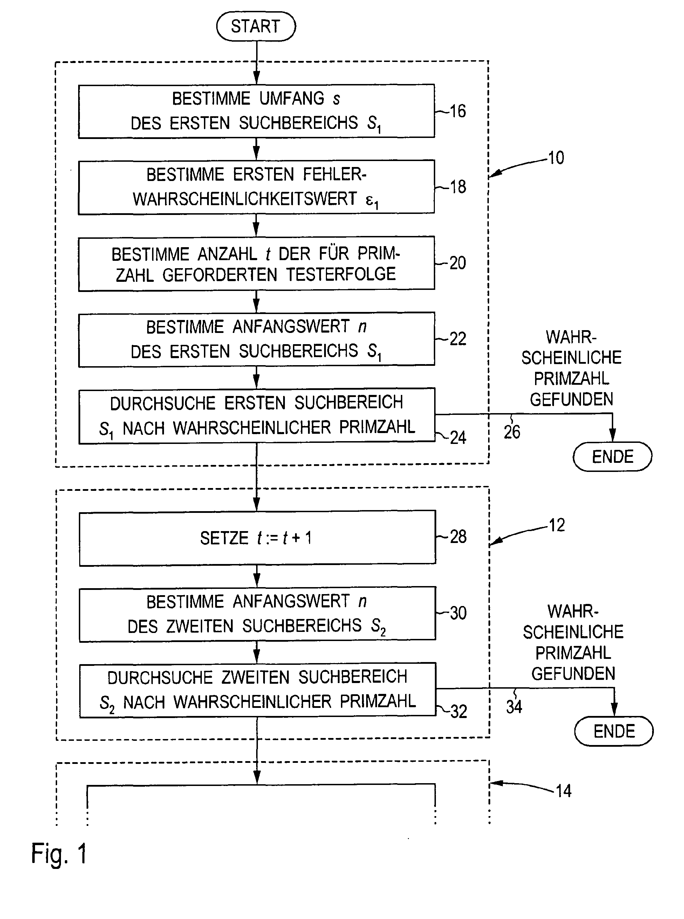

Fig. 1 als einzige Zeichnungsfigur veranschaulicht einen Berechnungsablauf gemäß einem Ausführungsbeispiel der Erfindung.

In Fig. 1 sind eine erste Stufe 10, eine zweite Stufe 12 und der Anfang einer dritten Stufe 14 eines beispielhaften Berechnungsablaufs dargestellt. Es versteht sich, daß die in Fig. 1 linear angeordneten Berechnungsschritte in einer tatsächlichen Implementierung in der Regel durch eine Programmschleife mit geeigneten Initialisierungsschritten realisiert werden, so daß jede Stufe ungefähr einem Schleifendurchlauf entspricht.

Die erste Stufe 10 in Fig. 1 beginnt in Schritt 16 damit, daß der Umfang s des ersten Suchbereichs *S*₁, also die Anzahl der in diesem Suchbereich *S*₁ enthaltenen Zahlen, die nacheinander auf ihre mögliche Primzahleigenschaft überprüft werden sollen, festgelegt wird. Im vorliegenden Ausführungsbeispiel wird dieser Umfangswert s auch für alle weiteren Suchbereiche *S*_{*i*} verwendet. Jeder Suchbereich *S*_{*i*} besteht jeweils aus s ungeraden Zahlen, beginnend mit je einem von Stufe zu Stufe unterschiedlichen Startwert *n*.

In Schritt 18 wird ein erster Fehlerwahrscheinlichkeitswert ε₁ bestimmt, der kleiner als eine vorgegebene, durch das Verfahren garantierte Gesamtfehlerwahrscheinlichkeit ε ist. Im vorliegenden Ausführungsbeispiel wird ε₁ = ε/2 gewählt.

Im folgenden Schritt 20 wird auf Grundlage an sich bekannter Abschätzungen, wie sie beispielsweise in den eingangs zitierten Artikeln von Rabin und von Brandt und Damgard enthalten sind, die Anzahl *t* von probabilistischen Primzahltests festgelegt, die ein zu untersuchender Wert im ersten Suchbereich *S*₁ bestehen muß, um als wahrscheinliche Primzahl akzeptiert zu werden. Durch geeignete Wahl von *t* wird sichergestellt, daß die tatsächliche Fehlerwahrscheinlichkeit, also die Wahrscheinlichkeit, daß der akzeptierte Datenwert keine Primzahl repräsentiert, höchstens so groß wie der erste Fehlerwahrscheinlichkeitswert ε₁ ist. In die Abschätzung gehen die Bitlänge *k* der Zahlen im zu durchsuchenden Intervall, der in Schritt 16 ermittelte Umfang des ersten Suchbereichs *S*₁ und der erste Fehlerwahrscheinlichkeitswert ε₁ ein.

In Schritt 22 wird der Anfangswert *n* des ersten Suchbereichs *S*₁ festgelegt. Dieser Wert ist eine zufällig gewählte, ungerade, natürliche Zahl mit der vorgegebenen Bitlänge *k*. Ferner werden einige weitere Bedingungen hinsichtlich der durch diesen Anfangswert *n* definierten Lage des Suchbereichs *S*₁ im Zahlenraum beachtet, um sicherzustellen, daß jede innerhalb des Suchbereichs *S*₁ aufgefundene Primzahl die als Primfaktor für einen RSA-Schlüssel geforderten Eigenschaften aufweist. Es muß darauf geachtet werden, daß der Anfangswert *n* für Dritte nicht vorhersehbar ist, also auf einer kryptographisch sicheren Zufallszahl beruht.

In Schritt 24 wird der erste Suchbereich *S*₁ der Reihe nach durchsucht, um eine wahrscheinliche Primzahl zu finden. Jede untersuchte Zahl wird hierbei maximal *t* Rabin-Miller-Tests mit jeweils zufällig gewählten Basen unterzogen. Sobald ein Test anzeigt, daß die untersuchte Zahl zusammengesetzt ist, wird die Untersuchung mit dem nächsten Element des ersten Suchbereichs *S*₁ fortgesetzt. Sobald eine Zahl alle *t* Rabin-Miller-Tests besteht, wird sie als wahrscheinliche Primzahl identifiziert, und das Verfahren endet mit einem Aussprung 26. Die aufgefundene wahrscheinliche Primzahl liegt dann als technisch repräsentierter Datenwert - z.B. als Bitfeld oder Registerinhalt - vor und kann beispielsweise zur RSA-Schlüsselerzeugung weiterverarbeitet werden.

Wenn in Schritt 24 keine der insgesamt s Zahlen im ersten Suchbereich *S*₁ die erforderliche Anzahl von Rabin-Miller-Tests bestanden hat, wird das Verfahren mit der zweiten Stufe 12 fortgesetzt. In Schritt 28 wird die Anzahl *t* der für jede zu überprüfende Zahl maximal durchzuführenden Rabin-Miller-Tests um 1 erhöht. Da jeder zusätzliche Rabin-Miller-Test eine Fehlerwahrscheinlichkeit von höchstens 25 % aufweist und von den anderen Rabin-Miller-Tests unabhängig ist, verringert sich dadurch die tatsächliche Fehlerwahrscheinlichkeit der zweiten Stufe 12 auf höchstens ein Viertel der Fehlerwahrscheinlichkeit der ersten Stufe 10. Zum Zwecke der im folgenden noch vorzunehmenden Abschätzung der Gesamtfehlerwahrscheinlichkeit ε reicht es jedoch aus, wenn der Fehlerwahrscheinlichkeitswert ε₂ der zweiten Stufe 12 mit ε₂ = ε₁/2 = ε/4 angesetzt wird.

Die Schritte 30 und 32 in der zweiten Stufe 12 werden analog zu den Schritten 22 und 24 der ersten Stufe 10 ausgeführt. In Schritt 30 wird der Anfangswert *n* für den in der zweiten Stufe 12 zu durchsuchenden Suchbereich *S*₂ bestimmt. Dieser zweite Suchbereich *S*₂ wird in Schritt 32 durchsucht, um eine wahrscheinliche Primzahl zu finden. Sobald eine Zahl im zweiten Suchbereich *S*₂ bei ihrer Überprüfung *t* Rabin-Miller-Tests bestanden hat - also wegen Schritt 28 einen Test mehr als in der ersten Stufe 10 -, wird diese Zahl als wahrscheinliche Primzahl ausgegeben, und das Verfahren endet mit einem Aussprung 34.

Wenn bei der Durchsuchung des zweiten Suchbereichs *S*₂ in der zweiten Stufe 12 keine wahrscheinliche Primzahl gefunden wurde, wird die dritte Stufe 14 durchgeführt. Diese dritte Stufe 14 enthält zwei Verfahrensschritte, die den Schritten 30 und 32 der zweiten Stufe 12 entsprechen. Im Gegensatz zur zweiten Stufe 12 wird jedoch die Maximalanzahl *t* der durchzuführenden Rabin-Miller-Tests in der dritten Stufe 14 nicht erhöht. Dennoch kann der zur Analyse des Verfahrens herangezogene Fehlerwahrscheinlichkeitswert ε₃ für die dritte Stufe 14 mit der Hälfte des Fehlerwahrscheinlichkeitswerts ε₂ der zweiten Stufe 12 angesetzt werden. Weil sich die tatsächliche Fehlerwahrscheinlichkeit schon in der zweiten Stufe 12 um den Faktor 4 verringert hat, ist der mit ε₃ = ε₂/2 = ε₁/4 = ε/8 angesetzte Fehlerwahrscheinlichkeitswert ε₃ nicht größer als die tatsächliche Fehlerwahrscheinlichkeit der dritten Stufe 16.

Das Verfahren wird so lange mit weiteren Stufen fortgesetzt, bis eine wahrscheinliche Primzahl gefunden wurde. Die Maximalanzahl *t* der durchzuführenden Rabin-Miller-Tests wird hierbei beim Übergang zu jeder "geraden" Stufe um 1 erhöht und beim Übergang zu jeder "ungeraden" Stufe konstant gehalten. Die Fehlerwahrscheinlichkeitswerte ε_{*i*}, die obere Schranken für die tatsächliche Fehlerwahrscheinlichkeit in den einzelnen Stufen darstellen, fallen dennoch exponentiell mit der Stufenanzahl i; genauer gilt im vorliegenden Ausführungsbeispiel ε_{*i*} = ε · 2^{-*i*} für i = 1, 2, 3, .... Durch Aufsummieren der geometrischen Reihe ergibt sich die gewünschte Beziehung, daß das vorliegende Verfahren eine durch die Summe der Fehlerwahrscheinlichkeiten in den einzelnen Stufen gegebene Gesamtfehlerwahrscheinlichkeit aufweist, die kleiner als der geforderte Wert ε ist.

Wie bereits erwähnt, ist die Darstellung in Fig.1 als schematisches Ablaufdiagramm zu verstehen. In einer Beispielsimplementierung können z.B. die Schritte 22 und 24 der ersten Stufe 10 ebenso wie die Schritte 30 und 32 der zweiten Stufe 12 und die entsprechenden Schritte der weiteren Stufen von dem folgenden Unterprogramm PRIMEINC ausgeführt werden, das als solches aus den eingangs genannten Artikeln von Rabin und von Brandt und Damgard bekannt ist.

Das Unterprogramm PRIMEINC erhält als Eingaben die Bitlänge *k* der zu erzeugenden Primzahlen, die Anzahl *t* der für jede zu untersuchende Zahl maximal auszuführenden Rabin-Miller-Tests und den Umfang s des Suchbereichs. Dieser Suchbereich besteht bei dem Programm PRIMEINC aus einem zufällig gewählten und gleichverteilten Anfangswert *n* und den weiteren Werten *n*+2, *n*+4, ..., *n*+(2*s*-2). Das Programm PRIMEINC kann fehlschlagen, wenn im untersuchten Bereich keine wahrscheinliche Primzahl gefunden wird. Sonst gibt das Programm PRIMEINC eine wahrscheinliche Primzahl mit der Bitlänge *k* aus. In der folgenden Pseudocodenotation stellen die links angegebenen Zahlen Zeilennummern dar; die Zeilen (8) und (11) sind Kommentare:

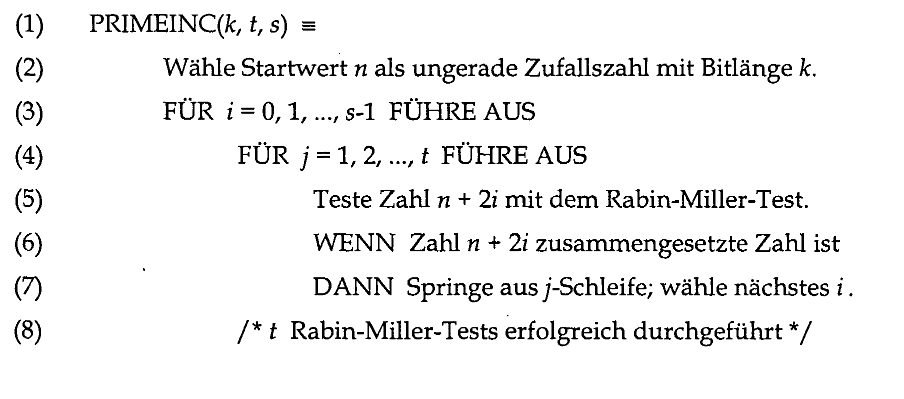

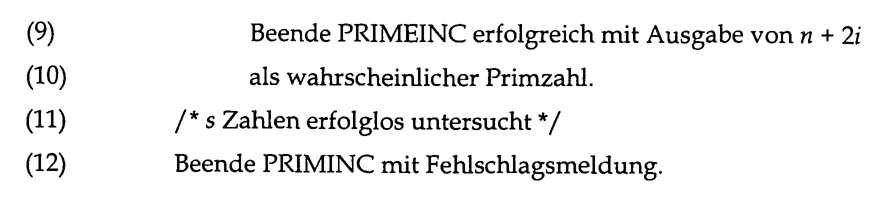

Die Zeile 2 des Programms PRIMEINC entspricht den Schritten 22 bzw. 30 in Fig. 1, während die Programmschleife in den Zeilen (3) bis (12) den Schritten 24 bzw. 32 entspricht. Die Aussprünge 26 bzw. 34 bei erfolgreicher Primzahlsuche entsprechen den Zeilen (9) und (10).

Das im folgenden in Pseudocodenotation gezeigte Programm PRIMEGEN veranschaulicht eine praxisnahe Implementierung eines Ausführungsbeispiels der Erfindung. Als Eingaben erwartet das Programm PRIMEGEN die Bitlänge *k* der zu erzeugenden Primzahl und die einzuhaltende Gesamtfehlerwahrscheinlichkeit ε. Als Ausgabe liefert das Programm PRIMEGEN einen Datenwert, der mindestens mit der Wahrscheinlichkeit 1-ε eine Primzahl repräsentiert:

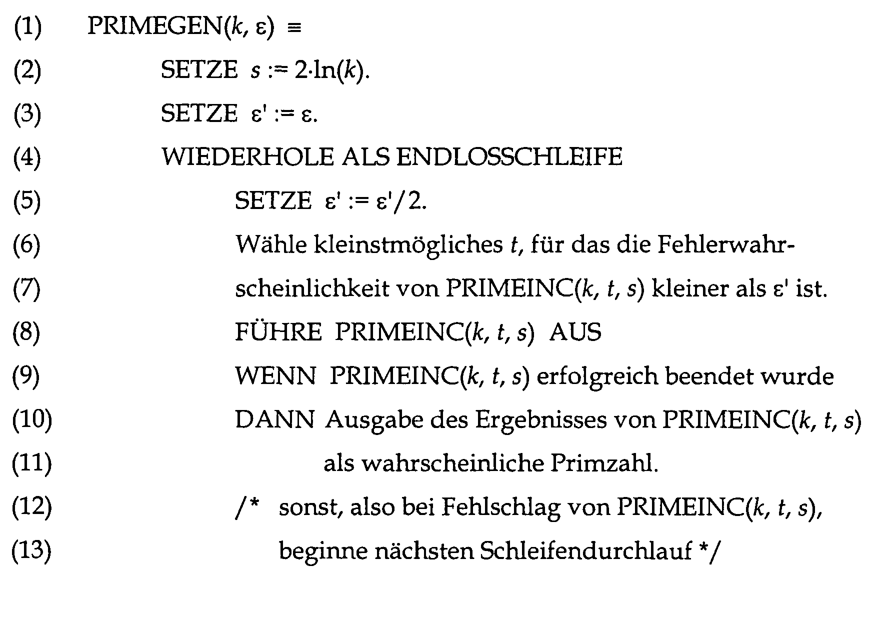

Zeile (2) des Programms PRIMEGEN entspricht Schritt 16 in Fig. 1. Der erste Fehlerwahrscheinlichkeitswert ε₁ der ersten Stufe 10 wird in den Zeilen (3) und (5) während des ersten Schleifendurchlaufs als Wert ε' ermittelt. Die Zeilen (6) und (7) des ersten Schleifendurchlaufs von PRIMEGEN entsprechen Schritt 20 in Fig. 1. Bei weiteren Schleifendurchläufen können, wie bereits in Zusammenhang mit Fig. 1 beschrieben, die in den Zeilen (5) bis (7) ausgeführten Berechnungen durch Inkrementieren des Wertes *t* bei jedem oder jedem zweiten Schleifendurchlauf ersetzt werden. Wie bereits erwähnt, werden die Schritte 22, 24 und 30, 32 durch den Aufruf von PRIMEINC(*k, t, s*) in Zeile (8) ausgeführt.

Für eine vorgegebene Anwendung, z.B. die Schlüsselgenerierung bei RSA-Verfahren, ist oft die Gesamtfehlerwahrscheinlichkeit ε konstant vorgegeben. Die in den Zeilen (5) - (7) des ersten Schleifendurchlaufs berechnete Anzahl *t* wird dann durch die Bitlänge *k* bestimmt, weil gemäß der Berechnung in Zeile (2) auch s durch *k* bestimmt ist. Da die Abschätzung von *t* aufwendig ist, ist in vorteilhaften Ausgestaltungen eine Tabelle vorgesehen, die für jede Bitlänge *k* in dem in Frage kommenden Bitlängenbereich den entsprechenden Wert von *t* für den ersten Schleifendurchlauf angibt. Diese Ausgestaltung ist insbesondere in Kombination mit einer Weiterschaltung von *t* wie in Schritt 28 von Fig. 1 vorteilhaft, weil dann die obigen Zeilen (5) - (7) durch eine einfache Tabellenabfrage in einem vorbereitenden Schritt und eine Weiterschaltung von *t* im Schleifenkörper ersetzt werden können.

In vorteilhaften Weiterentwicklungen des Unterprogramms PRIMEINC werden vor Beginn der Rabin-Miller-Tests Zahlen im Suchbereich, die Vielfache kleiner Primzahlen sind, nach dem Prinzip des Eratosthenes-Siebes gestrichen. Durch diese Vorabprüfung wird die Laufzeit des Unterprogramms PRIMEINC verringert. Alternativ oder zusätzlich kann vorab ein weiterer Rabin-Miller-Test mit der Basis 2 durchgeführt werden. Dieser Test, der sehr effizient implementiert werden kann, dient ebenfalls der Geschwindigkeitssteigerung, weil durch ihn viele zusammengesetzte Zahlen sofort als solche identifiziert werden. Die maximale Fehlerwahrscheinlichkeit des Unterprogramms PRIMEINC wird durch diese Optimierungen keinesfalls erhöht, sondern möglicherweise sogar verringert, so daß gegebenenfalls weiterer Zeitgewinn durch Einsparung von Rabin-Miller-Tests möglich ist.

Es versteht sich, daß in den oben beschriebenen Verfahren auch andere probabilistische Primzahltests verwendet werden können, beispielsweise der quadratische Frobenius-Test oder der Fermat-Test oder Varianten davon. Die erforderlichen Anpassungen der Verfahren kann der Fachmann auf Grundlage der Offenbarung des vorliegenden Dokuments durchführen.

Die oben beschriebenen Verfahren sind dazu vorgesehen, von einem Prozessor eines tragbaren Datenträgers, insbesondere einer Chipkarte oder eines Chipmoduls, ausgeführt zu werden. Die Verfahren sind dazu in Form von Programmbefehlen implementiert, die in einem ROM oder einem EEPROM oder einem sonstigen Speicher des Datenträgers enthalten sind.

## Patentansprüche

1. Verfahren zum Ermitteln eines Datenwertes, der mit überwiegender Wahrscheinlichkeit eine Primzahl repräsentiert und höchstens mit einer vorgegebenen Gesamtfehlerwahrscheinlichkeit (ε) eine zusammengesetzte Zahl repräsentiert, mit den Schritten:
- Ausführen einer ersten Stufe (10), mit den Schritten:
-- Bestimmen (16, 22) eines ersten Suchbereichs (S₁), und
-- Suchen (24) im ersten Suchbereich (S₁), um mittels probabilistischer Primzahltests einen Datenwert zu ermitteln, der mit überwiegender Wahrscheinlichkeit eine Primzahl repräsentiert, wobei die Fehlerwahrscheinlichkeit höchstens so groß wie ein erster Fehlerwahrscheinlichkeitswert (ε₁) ist und der erste Fehlerwahrscheinlichkeitswert (ε₁) kleiner als die Gesamtfehlerwahrscheinlichkeit (ε) ist, und
- wenn in der ersten Stufe (10) kein geeigneter Datenwert gefunden wurde, dann Ausführen je einer weiteren Stufe (12, 14) mit den folgenden Schritten solange, bis ein geeigneter Datenwert gefunden wird:
-- Bestimmen (30) eines weiteren Suchbereichs (S_{*i*+1}), und
-- Suchen (32) im weiteren Suchbereich (S_{*i*+1}), um mittels probabilistischer Primzahltests einen Datenwert zu ermitteln, der mit überwiegender Wahrscheinlichkeit eine Primzahl repräsentiert, wobei die Fehlerwahrscheinlichkeit höchstens so groß wie ein weiterer Fehlerwahrscheinlichkeitswert (ε_{*i*+1}) ist und die Folge der Fehlerwahrscheinlichkeitswerte (ε₁, ε₂ ... ε_{*i*+1}) monoton oder strikt monoton sinkt.

2. Verfahren nach Anspruch 1, **dadurch gekennzeichnet, daß** die Fehlerwahrscheinlichkeiten in den weiteren Stufen (12,14) jeweils **dadurch** verringert werden, daß die Anzahl (t) der probabilistischen Primzahltests, die eine Zahl aus dem jeweiligen Suchbereich (S_{*i*+1}) bestehen muß, damit diese Zahl als wahrscheinliche Primzahl angesehen wird, gegenüber einer unmittelbar oder mittelbar vorhergehenden Stufe gemäß einer vorgegebenen Regel erhöht wird.

3. Verfahren nach Anspruch 2, **dadurch gekennzeichnet, daß** die vorgegebene Regel lautet, daß die Anzahl der probabilistischen Primzahltests (*t*) nach jeweils einer bestimmten Anzahl von Stufen um eins erhöht wird.

4. Verfahren nach einem der Ansprüche 1 bis 3, **dadurch gekennzeichnet, daß** jeder Suchbereich (S_{*i*}) eine einelementige Menge und/oder ein Intervall und/oder eine Vereinigung mehrerer Intervalle und/ oder eine endliche arithmetische Folge und/ oder eine Vereinigung mehrerer endlicher arithmetischer Folgen und/ oder ein Intervall, aus dem mindestens eine endliche arithmetische Folge ausgeschlossen wurde, und/oder eine Vereinigung von Intervallen, aus denen jeweils mindestens eine endliche arithmetische Folge ausgeschlossen wurde, ist.

5. Verfahren nach einem der Ansprüche 1 bis 4, **dadurch gekennzeichnet, daß** aus jedem Suchbereich (S_{*i*}) zusammengesetzte Zahlen, die zumindest einen Teiler mit höchstens einer vorbestimmten Maximalgröße aufweisen, nach dem Prinzip des Eratosthenes-Siebes ausgeschlossen werden.

6. Verfahren nach einem der Ansprüche 1 bis 5, **dadurch gekennzeichnet, daß** durch einen probabilistischen Primzahltest die getestete Zahl entweder als eine zusammengesetzte Zahl oder als eine mögliche Primzahl identifiziert wird.

7. Verfahren nach Anspruch 6, **dadurch gekennzeichnet, daß** die zu testende Zahl vor dem Ausführen des probabilistischen Primzahltests durch mindestens eine Probedivision auf ihre Teilbarkeit durch mindestens eine Zahl überprüft wird.

8. Verfahren nach Anspruch 6 oder Anspruch 7, **dadurch gekennzeichnet, daß** für jede zu testende Zahl ein vorbereitender probabilistischer Primzahltest mit einer Basis, vorzugsweise der Basis 2 ausgeführt wird.

9. Verfahren nach einem der Ansprüche 1 bis 8, **dadurch gekennzeichnet, daß** jeder probabilistische Primzahltest einen quadratischen Frobenius-Test und/ oder einen Fermat-Test und/ oder einen Rabin-Miller-Test umfaßt.

10. Verfahren nach einem der Ansprüche 1 bis 9, **dadurch gekennzeichnet, daß** die Fehlerwahrscheinlichkeitswerte (ε₁, ε₂, ...) eine konvergente oder geometrische Reihe bilden, deren Summe höchstens die Gesamtfehlerwahrscheinlichkeit (ε) ist.

11. Verfahren nach einem der Ansprüche 1 bis 10, **dadurch gekennzeichnet, daß** der ermittelte Datenwert eine Zufallszahl repräsentiert.

12. Verfahren nach einem der Ansprüche 1 bis 11, **dadurch gekennzeichnet, daß** die Bestimmung der Suchbereiche (S_{*i*}) zumindest auch in Abhängigkeit von einem zufälligen oder pseudo-zufälligen Wert erfolgt.

13. Verfahren nach einem der Ansprüche 1 bis 12, **dadurch gekennzeichnet, daß** das Verfahren zu kryptographischen Zwecken, insbesondere zur RSA-Schlüsselgenerierung dient.

14. Computerprogrammprodukt mit einer Vielzahl von Programmbefehlen, die mindestens einen Prozessor dazu veranlassen, ein Verfahren nach einem der Ansprüche 1 bis 13 auszuführen.

15. Vorrichtung, insbesondere tragbarer Datenträger, mit mindestens einem Prozessor und mindestens einem Speicher, wobei die Vorrichtung dazu eingerichtet ist, ein Verfahren nach einem der Ansprüche 1 bis 13 auszuführen.
